# EUROPÄISCHE PATENTSCHRIFT

(11) **EP 1 616 104 B1**
(45) Veröffentlichungstag und Bekanntmachung des Hinweises auf die Patenterteilung: **17.01.2007**
(21) Anmeldenummer: 04711304.8
(22) Anmeldetag: 14.02.2004
(51) Int. Cl.: F15B 15/14

(54) **BEFESTIGUNGSELEMENT UND DARAUF ABGESTIMMTER ZYLINDERDECKEL EINES FLUIDBETÄTIGTEN ARBEITSZYLINDERS**
FASTENING ELEMENT AND ADAPTED CYLINDER COVER OF A FLUID-ACTUATED WORKING CYLINDER
ELEMENT DE FIXATION ET COUVERCLE, ADAPTE A CE DERNIER, D'UN VERIN HYDRAULIQUE

(30) Priorität: 24.04.2003 DE 20306379 U
(43) Veröffentlichungstag der Anmeldung: 18.01.2006
(73) Patentinhaber: Festo AG & Co., 73734 Esslingen (DE)
(72) Erfinder: MÜLLER, Gerald, 70329 Stuttgart (DE); WAGNER, Albrecht, 73650 Winterbach (DE)
(74) Vertreter: Abel, Martin
(86) Internationale Anmeldenummer: PCT/EP2004/001407
(87) Internationale Veröffentlichungsnummer: WO 2004/094837

(56) Entgegenhaltungen:
- EP-A- 0 994 260
- GB-A- 1 289 957
- US-A- 3 429 234
- US-A- 3 688 646

## Beschreibung

Die Erfindung betrifft ein Befestigungselement zur variablen Lagerung eines fluidbetätigten Arbeitszylinders sowie einen auf ein solches Befestigungselement abgestimmten Zylinderdeckel.

Fluidbetätigte Arbeitszylinder weisen einen mit pneumatischem oder hydraulischem Druck beaufschlagbaren Zylinderraum auf, in dem ein Kolben mit einer daran angeordneten Kolbenstange verschiebbar aufgenommen ist. Das Zylindergehäuse setzt sich meist aus einem Zylinderrohr und aus zwei endseitig daran fixierten Zylinderdeckeln zusammen. Während seines Einsatzes ist der Arbeitszylinder an seinem Gehäuse starr oder schwenkbar gelagert.

Zur Befestigung und Lagerung von solchen fluidbetätigten Arbeitszylindern eignen sich grundsätzlich vor allem drei verschiedene Befestigungsarten. Bei einer sogenannten Fußbefestigung wird der Zylinder mit seitlicher Orientierung an beiden Endbereichen fixiert. Bei einer sogenannten Schwenkbefestigung erfolgt eine Lagerung an lediglich einem Endbereich, sodass ein Verschwenken um eine quer zur Vorschubrichtung des Zylinders verlaufende Achse möglich ist. Eine solche Befestigung ist in GB 1289957 offenbart. Bei einer sogenannten Flanschbefestigung wird der Zylinder rückseitig und/oder vorderseitig mit axialer Orientierung befestigt. Bei der Fuß- und bei der Flanschbefestigung ist der Zylinder starr verankert, während er bei der Schwenkbefestigung schwenkbeweglich gelagert ist.

Alle drei verschiedenen Befestigungsarten erfordern bisher unterschiedliche Befestigungsmittel. Die Befestigungsmittel können integrierter Teil des Zylindergehäuses sein und/oder mit diesem verbindbar beziehungsweise an diesem befestigbar sein. Nachteilig hieran ist die mangelnde Universalität der Befestigungsmittel, die je nach Befestigungsart teilweise sehr unterschiedlich ausgestaltet sein müssen.

Der vorliegenden Erfindung liegt die Aufgabe zugrunde, eine universelle Befestigungsmöglichkeit für einen Arbeitszylinder zur Verfügung zu stellen, die sich variabel an unterschiedliche Befestigungsarten anpassen lässt.

Diese Aufgabe wird gelöst mit einem Befestigungselement zur variablen Schwenk- und/oder Festlagerung eines Arbeitszylinders, mit einem Basisbereich, der Befestigungsmittel zu seiner Befestigung an einer Tragstruktur aufweist und von dem zwei sich mit Abstand gegenüberliegende Befestigungsarmen wegragen, wobei die Befestigungsarme mit Lagermitteln für einen schwenkbeweglichen Lagerungseingriff an einander entgegengesetzten Seiten des Außenumfanges des Arbeitszylinders ausgestattet sind und der Basisabschnitt mit Lagermitteln für einen bedarfsweise zusätzlichen stirnseitigen formschlüssigen Lagerungseingriff an dem Arbeitszylinder ausgebildet ist.

Ferner wird die Aufgabe gelöst mit einem Zylinderdeckel eines Arbeitszylinders, der zur Lagerung an einem derartigen Befestigungselement ausgebildet ist, mit ersten Lagermitteln an einander entgegengesetzten Seiten des Außenumfanges des Zylinderdeckels und mit einer axialen Durchgangsbohrung, die zur wahlweisen Lagerung einer Kolbenstange oder zur Aufnahme eines stopfens vorbereitet ist und die in einen an einer äu-ßeren Stirnseite des Zylinderdeckels vorgesehenen Zentriervorsprung mündet, wobei die ersten Lagermittel zur Verbindung mit an Befestigungsarmen des Befestigungselementes vorgesehenen zweiten Lagermitteln und der Zentriervorsprung zur Verbindung mit an dem Basisbereich des Befestigungselementes vorgesehenen dritten Lagermitteln ausgebildet sind.

Ein erfindungsgemäßes Befestigungselement zur variablen Schwenk- und/oder Festlagerung eines Arbeitszylinders weist einen Basisbereich mit Befestigungsmitteln zu seiner ortsfesten Befestigung und daran angeordnete Befestigungsarme zur beidseitigen Lagerung des Arbeitszylinders an dessen Außenumfang auf. Ferner ist der Basisabschnitt für eine zusätzliche stirnseitige formschlüssige und insbesondere steckbare Lagerung an dem Arbeitszylinder ausgebildet, auf die bei Bedarf zurückgegriffen werden kann. Das Befestigungselement ermöglicht somit eine variable Lagerung des Arbeitszylinders, wobei dieser wahlweise mittels einer Schwenkbefestigung, einer Flanschbefestigung oder einer Fußbefestigung fixiert und/oder schwenkbar gelagert werden kann. Für eine Fußbefestigung sind vorzugsweise zwei Befestigungselemente vorgesehen, die beabstandet voneinander angeordnet sind und in denen der Arbeitszylinder mit den jeweiligen Befestigungsarmen fixiert ist. Die an sich vorhandenen Schwenkfreiheitsgrade werden durch diese paarweise Anordnung unterdrückt. Mit einer einzigen Bauart eines Befestigungselementes sind somit unterschiedliche Befestigungsarten eines Arbeitszylinders möglich, so dass der Fertigungs- und Montageaufwand gegenüber bisher üblichen Befestigungsarten erheblich reduziert werden kann.

Merkmale vorteilhafter Weiterbildungen der Erfindung ergeben sich aus den Unteransprüchen.

Vorzugsweise sind am Arbeitszylinder erste Lagermittel vorgesehen, die insbesondere als Aufnahmen, als Vertiefungen oder Sacklöcher oder dergleichen ausgebildet sein können. In diese ersten Lagermittel können zweite Lagermittel verdrehbar eingreifen, die an den freien Enden der Befestigungsarme als Stifte, als Zapfen oder als Achsstummel oder dergleichen angeordnet sind. Wahlweise können die ersten Lagermittel am Arbeitszylinder auch als Stifte oder Zapfen ausgebildet sein, während die zweiten Lagermittel an den Befestigungsarmen des Befestigungselements als Aufnahmen beziehungsweise als Vertiefungen ausgebildet sind. Wesentlich ist, dass die ersten und zweiten Lagermittel jeweils komplementär zueinander ausgebildet sind, so dass eine feste und/oder schwenkbare Lagerung des Arbeitszylinders möglich ist.

Eine bevorzugte Ausgestaltung sieht vor, dass die Befestigungsarme federelastisch am Basisbereich des Befestigungselements verankert sind, so dass die zweiten Lagermittel problemlos mittels einer Rastverbindung in die ersten Lagermittel des Arbeitszylinders eingefügt werden können. Nach dem Einrasten der Lagermittel kann das Befestigungselement vorzugsweise nur durch Auseinanderdrücken der Befestigungsarme wieder vom Arbeitszylinder getrennt werden.

Mittels der ersten und zweiten Lagermittel ist bereits eine universelle Befestigungs- und/oder Lagermöglichkeit des Arbeitszylinders ermöglicht. Bei Verwendung nur eines Befestigungselements kann der Arbeitszylinder um eine Schwenkachse verschwenkt werden, die durch die Lagermittel verläuft. Eine solche Lagerung entspricht einer sogenannten Schwenklagerung des Arbeitszylinders, bei der der Arbeitszylinder um eine Achse verschwenkbar ist, die senkrecht zur Vorschubrichtung einer Kolbenstange des Arbeitszylinders verläuft. Das Befestigungselement sitzt dabei seitlich am Arbeitszylinder. Werden zwei Befestigungselemente verwendet, so kann der Arbeitszylinder durch Unterdrückung der Drehfreiheitsgrade der Lagerungsmaßnahmen starr gelagert werden. Die Befestigungselemente sind hierbei voneinander beabstandet angeordnet. Sie können insbesondere an entgegengesetzten Endabschnitten des Arbeitszylinders befestigbar sein. Diese Art der Lagerung entspricht einer sogenannten Fußbefestigung.

Gemäß einer weiteren Ausgestaltung der Erfindung sind am Befestigungselement dritte Lagermittel zur Fixierung eines freien Endes des Arbeitszylinders vorgesehen, insbesondere zum Eingriff eines Zentriervorsprungs des Arbeitszylinders, der sich zweckmäßigerweise an einem Zylinderdeckel befindet. Beim Eingriff des Zentriervorsprungs in die dritten Lagermittel stehen gleichzeitig auch die ersten und zweiten Lagermittel miteinander im Eingriff, so dass sich mit nur einem Befestigungselement insgesamt eine starre Lagerung des Arbeitszylinders ergibt.

Insbesondere können die dritten Lagermittel ein Durchbruch oder Zentrierloch oder dergleichen sein, das zum Eingriff eines zylindrisch und/oder kegelförmig ausgebildeten und zumindest an einer Stirnseite des Arbeitszylinders angeordneten Zentriervorsprungs vorgesehen sein kann. Vorzugsweise sind an beiden stirnseiten des Arbeitszylinders gleichartige Zentriervorsprünge vorgesehen, so dass das Befestigungselement wahlweise an einer der beiden Seiten montiert werden und somit als sogenannte Flanschbefestigung dienen kann. Je nach Einbauverhältnissen kann die Flanschbefestigung auch an beiden Seiten vorgesehen sein, wodurch eine besonders stabile Verankerung des Arbeitszylinders erreichbar ist. Durch die Ausbildung der dritten Lagermittel als Durchbruch kann das Befestigungselement problemlos auch an einer vorderen Seite des Arbeitszylinders befestigt werden, aus der eine verschiebbare Kolbenstange ragt.

Weiterhin können im Basisbereich Befestigungsmittel, insbesondere Durchbrüche, zur Aufnahme von Befestigungsschrauben vorgesehen sein. Damit kann das Befestigungselement an beliebiger Stelle einer geeigneten Tragstruktur, beispielsweise am Gestell einer Maschine fixiert werden.

Eine bevorzugte Ausgestaltung der Erfindung sieht vor, dass das Befestigungselement einstückig ausgebildet ist. Es kann insbesondere als Stanzbiegeteil aus einem metallischen Flachmaterial, beispielsweise aus Federstahl, gefertigt sein. Hierbei kann das Befestigungselement durch einen Stanzbiegevorgang hergestellt werden. Bei der Herstellung kann in den Basisbereich zunächst ein Zentrierloch eingebracht werden. Weiterhin können aus dem Basisbereich Umrisse der Befestigungsarme herausgestanzt und die Befestigungsarme senkrecht umgebogen werden, so dass sie jeweils mit einem abgewinkelten Fußbereich am Basisbereich des Befestigungselements verankert sind. Ein solches Befestigungselement lässt sich einfach und kostengünstig herstellen. Die einstückige Ausbildung sorgt zudem für die notwendige Stabilität bei gleichzeitig relativ geringen Abmessungen. Die ersten Lagermittel des Arbeitszylinders können durch vorübergehendes Auseinanderdrücken der federelastischen Befestigungsarme durch eine Rastverbindung mit den zweiten Lagermitteln des Befestigungselements verbunden werden.

Weiterhin können Stützlaschen vorgesehen sein, mit denen die Befestigungsarme nach ihrer Verbindung mit dem Arbeitszylinder gegen ein Auseinanderdrücken gesichert werden. Die Stützlaschen werden insbesondere durch Abwinkeln und Umbiegen von gegenüber liegenden freien Enden des Basisbereichs hergestellt. Sie können nach dem Einrasten der ersten und zweiten Lagermittel gegen Außenseiten der Befestigungsarme gedrückt werden. Vorzugsweise werden die Stützlaschen nach der Montage des Befestigungselement mittels der Befestigungsmittel durch diese in ihrer Stellung fixiert, so dass die Verbindung zwischen Arbeitszylinder und Befestigungselement gegen ein Trennen gesichert ist.

Ein erfindungsgemäßer Zylinderdeckel eines Arbeitszylinders, weist zweckmäßigerweise eine axiale Durchgangsbohrung auf, die wahlweise zur Lagerung und Führung einer Kolbenstange des Arbeitszylinders und zur Aufnahme eines Verschlussstopfens vorbereitet ist. Die axiale Durchgangsbohrung mündet in einen Zentriervorsprung an einer äußeren Stirnseite des Zylinderdeckels. Außerdem sind an einer Mantelfläche des Zylinderdeckels, an einander entgegengesetzten Seiten, erste Lagermittel vorgesehen. Somit eignet sich der Zylinderdeckel zur Verbindung mit einem Befestigungselement gemäß einer der zuvor beschriebenen Ausführungsformen, indem er mit daran angeordneten zweiten und/oder dritten Lagermitteln koppelbar ist.

Der Zylinderdeckel lässt sich zu beiden Seiten des Zylinderrohrs des Arbeitszylinders montieren und dient in einer Variante als Lagerdeckel, der einen druckdichtern Verschluss und eine Führung der Kolbenstange ermöglicht, sowie in einer anderen Variante als am anderen Ende angeordneter Abschlussdeckel, bei dem die zylindrische axiale Durchgangsbohrung mit einem Deckel beziehungsweise Stopfen druckdicht verschlossen ist.

Der Stopfen kann beispielsweise durch Einschrauben oder Bördeln in der axiale Durchgangsbohrung fixiert werden.

Ein derartiger Zylinderdeckel ist durch wenige Montageschritte für den einen oder den anderen Zweck geeignet und prinzipiell beliebig austauschbar.

Nachfolgend werden bevorzugte Ausführungsbeispiele unter Bezugnahme auf die beiliegenden Zeichnungen näher erläutert. Dabei zeigt:
- Figur 1: eine schematische Perspektivdarstellung eines einseitig mittels eines Befestigungselements gelagerten Arbeitszylinders,
- Figur 2: eine Variante einer Lagerung des Arbeitszylinders,
- Figur 3: eine schematische Perspektivdarstellung eines erfindungsgemäßen Befestigungselements,
- Figur 4: ein Flachmaterial zur Herstellung eines Befestigungselements durch Stanzen und Biegen,
- Figur 5: ein Befestigungselement vor seiner Verbindung mit dem Arbeitszylinder,
- Figuren 6 bis 8: weitere alternative Varianten zur Lagerung des Arbeitszylinders und
- Figur 9: einen schematischen Längsschnitt zur Verdeutlichung des Aufbaus eines Arbeitszylinders.

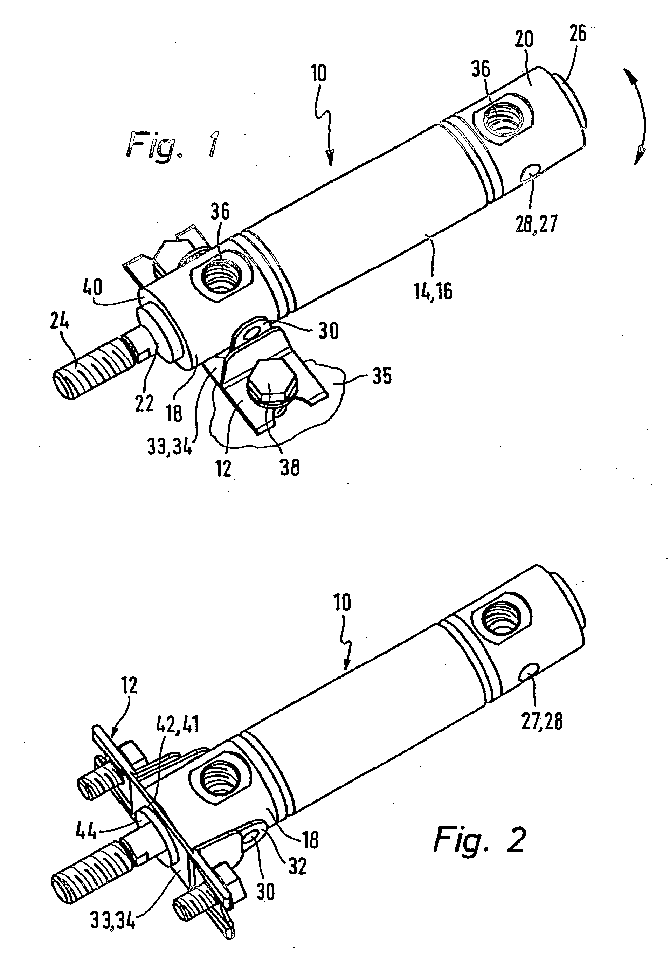

Figur 1 zeigt einen Arbeitszylinder 10, der an einer Mantelfläche eines Zylindergehäuses 14 mittels eines erfindungsgemäßen Befestigungselements 12 gelagert ist. Der Arbeitszylinder 10 umfasst im Wesentlichen ein Zylinderrohr 16, an dessen beiden stirnseitigen Enden jeweils Zylinderdeckel 18, 20 befestigt sind. Die Zylinderdeckel 18 und 20 können beispielsweise jeweils mit dem Zylinderrohr 16 stirnseitig verschraubt und/oder verpresst und/oder verbördelt sein.

Ein vorderer Zylinderdeckel 18 weist eine hohlzylindrische Öffnung 22 zur Durchführung einer Kolbenstange 24 des als einfach oder doppeltwirkender Linearantrieb fungierenden Arbeitszylinders 10 auf. Bei einem im Wesentlichen gleich aufgebauten hinteren Zylinderdeckel 20 ist die Öffnung 22 durch einen eingeschraubten oder anderweitig eingesetzten Stopfen 26 verschlossen. Auf gegenüberliegenden Seiten der zylindrischen Mantelflächen der Zylinderdeckel 18, 20 sind jeweils als erste Lagermittel 27 fungierende runde Aufnahmen 28 erkennbar, in die entsprechend passende Achsstummel 30 drehbar eingreifen können, die an als zweite Lagermittel 29 fungierenden Befestigungsarmen 32 angeordnet sind. Die Befestigungsarme 32 sind an einer einen Basisbereich 33 definierenden Grundplatte 34 des Befestigungselements 12 angeordnet und stehen senkrecht zu dieser und parallel zueinander.

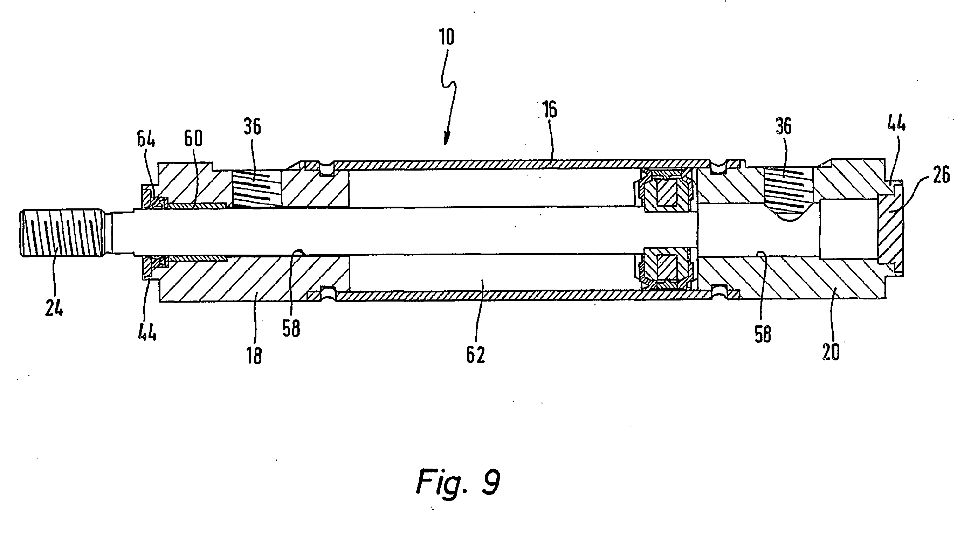

Weiterhin sind an den Zylinderdeckeln 18, 20 Fluidanschlüsse 36 zur Druckbeaufschlagung mit einem fluidischen Druckmedium erkennbar. Die vorderen und hinteren Zylinderdeckel 18, 20 sind im Wesentlichen gleich aufgebaut und können mit geringen Modifikationen untereinander ausgetauscht werden. Eine detaillierte Darstellung des Aufbaus des Arbeitszylinders 10 wird nochmals anhand des schematischen Längsschnittes der Figur 9 verdeutlicht.

Die Darstellung der Figur 1 zeigt eine einseitige Lagerung des vorderen Zylinderdeckels 18 mit einem Befestigungselement 12, was einer Schwenkbefestigung des Arbeitszylinders 10 entspricht. Der Arbeitszylinder 10 kann um die Achsstummel 30 des Befestigungselements 12 bezüglich des seitlich angeordneten Befestigungselementes 12 verschwenkt werden, was durch den Pfeil am hinteren Zylinderdeckel 20 angedeutet ist. Das Befestigungselement 12 selbst kann mit seiner Grundplatte 34 an einem gewünschten Einbauort mit einer dort vorgesehenen Tragstruktur 35 verschraubt werden. Hierzu dienen zwei als Befestigungsmittel 45 fungierende Befestigungslöcher 46 an den gegenüberliegenden Schmalseiten der Grundplatte 34, durch die in der gezeigten Darstellung jeweils Sechskantschrauben 38 gesteckt sind.

Figur 2 zeigt eine alternative Befestigungsmöglichkeit des Arbeitszylinders. Hierbei ist das Befestigungselement 12 gegenüber der Anordnung entsprechend Figur 1 um 90° verschwenkt, so dass die Grundplatte 34 eine Stirnseite 40 (vgl. Figur 1) des vorderen Zylinderdeckels 18 teilweise abdeckt. Mittig in der Grundplatte 34 des Befestigungselements 12 ist ein als dritte Lagermittel 41 fungierendes Zentrierloch 42 vorgesehen, das von seinem Durchmesser so bemessen ist, dass ein Zentriervorsprung 44 an der Stirnseite 40 des vorderen Zylinderdeckels 18 darin formschlüssig einsteckbar ist. Das Befestigungselement 12 sitzt somit mit axialer Orientierung am Arbeitszylinder 10 und ist durch die zusätzliche Lagerstelle unverdrehbar am Arbeitszylinder 10 festgelegt.

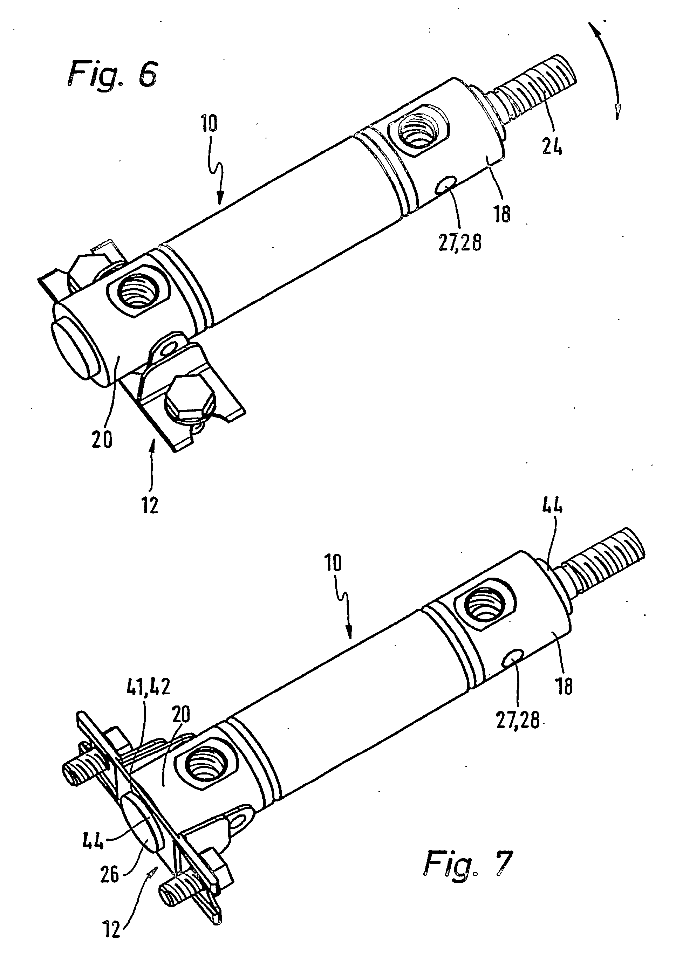

Die Zentriervorsprünge 44 des vorderen sowie des hinteren Zylinderdeckels 18, 20 weisen jeweils den gleichen Außendurchmesser auf, so dass das Befestigungselement 12 beliebig am vorderen und/oder hinteren Zylinderdeckel 18, 20 zur Flanschbefestigung montiert werden kann (vgl. Figur 7). Die Länge der Befestigungsarme 32 und der Abstand der Achsstummel 30 von der Grundplatte 34 sollten dabei so bemessen sein, dass die Grundplatte 34 spielfrei an der Stirnseite 40 der Zylinderdeckel 18 beziehungsweise 20 anliegen kann, während der Zentriervorsprung 44 weitgehend spielfrei in das Zentrierloch 42 eingreift.

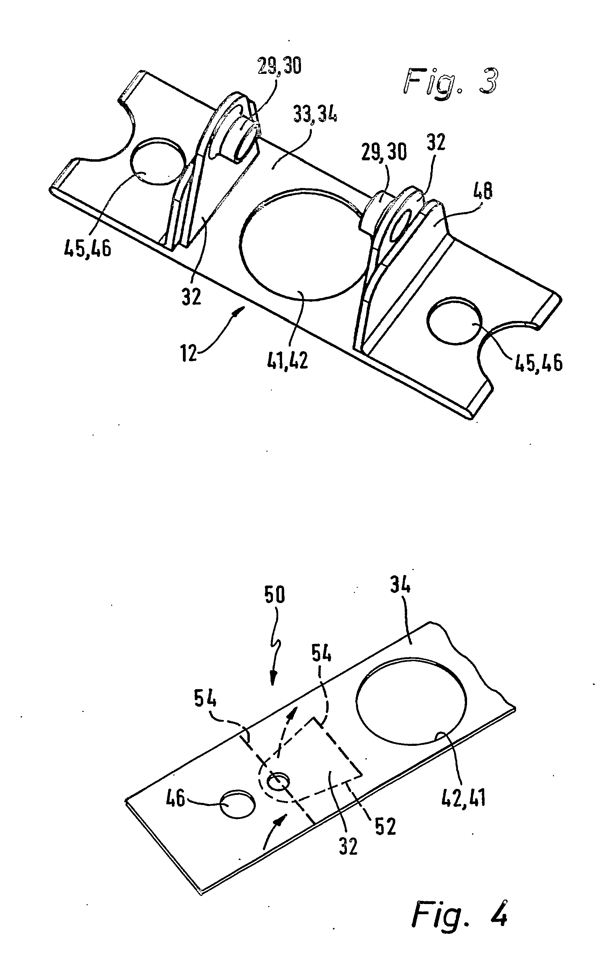

Figur 3 zeigt das Befestigungselement 12 in einer perspektivischen Darstellung. Das Befestigungselement 12 kann vorzugsweise aus gestanztem und gebogenem Stahlblech, Federstahl oder dergleichen hergestellt sein. Die Grundplatte 34 mit dem mittig darin angeordnetem Zentrierloch 42 weist eine längliche rechteckförmige Gestalt auf. Nahe der beiden Schmalseiten sind Befestigungslöcher 46 zum Durchstecken von Schrauben 38 vorgesehen. Zwischen Zentrierloch 42 und Befestigungslöchern 46 ragt jeweils ein Befestigungsarm 32 senkrecht von der Grundplatte 34 heraus, so dass sich die beiden Befestigungsarme 32 parallel gegenüberstehen. An ihren gegenüberliegenden Innenseiten der Befestigungsarme 32 sind jeweils die daran angebrachten Achsstummel 30 erkennbar, die in die entsprechenden Aufnahmen 28 an den Zylinderdeckeln 18, 20 eingesteckt werden können, um eine bewegliche oder feste Lagerung des Arbeitszylinders 10 an einem oder zwei Befestigungselementen 12 zu ermöglichen.

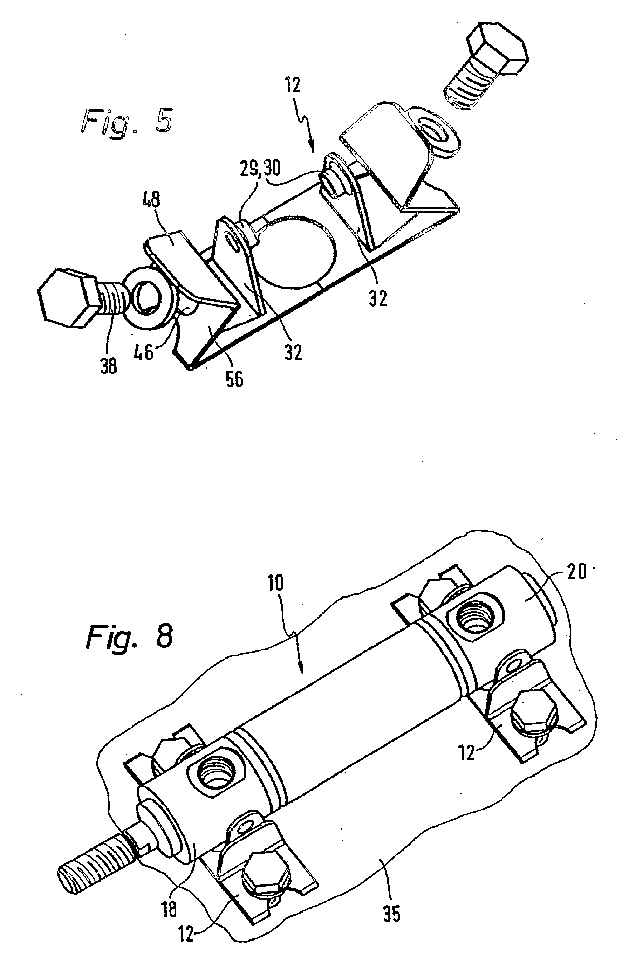

Die Befestigungsarme 32 sind zusätzlich mittels jeweils einer Stützlasche 48 versteift, deren Funktion und Wirkungsweise anhand der Figuren 4 und 5 näher erläutert wird.

Figur 4 zeigt ein rechteckförmiges Blech 50, das beispielsweise aus einem Federstahlstreifen bestehen kann. Darin ist das Zentrierloch 42 mittels eines Stanzvorgangs eingebracht.

Weiterhin ist eine unterbrochenen Linie erkennbar, die eine Stanzlinie 52 darstellt, die einen Außenumriss des hochzubiegenden Befestigungsarms 32 bildet. Biegelinien 54 sind als stärker ausgeführte, unterbrochene Linien dargestellt. Eine erste Biegelinie 54 bildet einen Verbindungsbereich zwischen einem Fußbereich des Befestigungsarms 32 und der Grundplatte 34 des Befestigungselements 12. Nach dem senkrechten Umbiegen des Befestigungsarms 32 in Pfeilrichtung wird ein Endabschnitt 56 des Blechs 50 entsprechend Figur 5 abgeknickt und umgebogen und bildet damit eine Stützlasche 48 für die federnd an der Grundplatte 34 angeordneten Befestigungsarme 32.

Die Montage des Befestigungselements 12 am vorderen oder hinteren Zylinderdeckel 18 bzw. 20 erfolgt durch Auseinanderdrücken der federnden Befestigungsarme 32, bis deren Achsstummel 30 in die entsprechenden Aufnahmen 28 an den Zylindermantelflächen der Zylinderdeckel 18 beziehungsweise 20 einrasten. Das Befestigungselement 12 wird dabei in die jeweils gewünschte Position gebracht. Dies kann eine Schwenkposition entsprechend Figur 1 oder eine Flanschbefestigung entsprechend Figur 2 sein. Anschließend werden die Endabschnitte 56 mit den bereits abgeknickten Stützlaschen 48 entsprechend Figur 5 in Richtung der Befestigungsarme 32 so umgebogen, dass die Stützlaschen 48 bündig an deren voneinander wegweisenden Außenseiten anliegen, wodurch ein Auseinanderbiegen der Befestigungsarme verhindert wird. Das Befestigungselement 12 ist auf diese Weise dauerhaft mit dem Arbeitszylinder 10 verbunden. Anschließend können die Schrauben 38 durch die Befestigungslöcher 46 hindurch gesteckt und das Befestigungselement 12 an einer gewünschten Stelle verschraubt und fixiert werden. Erst bei fixierten Schrauben 38 werden die Endabschnitte 56 so fixiert, dass die Stützlaschen 48 gegen die Außenseiten der Befestigungsarme 32 drücken und diese am Auseinanderbiegen hindern.

Die Figuren 6 bis 8 zeigen alternative Befestigungsmöglichkeiten des Arbeitszylinders 10 mit wenigstens einem beziehungsweise zwei erfindungsgemäßen Befestigungselementen 12.

So zeigt Figur 6 eine Schwenkbefestigung entsprechend Figur 1, mit dem Unterschied, dass hierbei der Arbeitszylinder 10 mittels seines hinteren Zylinderdeckels 20 schwenkbar am Befestigungselement 12 befestigt ist. Bei dieser Variante der Schwenkbefestigung ist das vordere Ende des Arbeitszylinders 10 mit der herausragenden Kolbenstange 24 in Pfeilrichtung um die Lageraufnahme des Befestigungselements 12 verschwenkbar.

Figur 7 zeigt wiederum eine unverschwenkbare, starre Flanschbefestigung entsprechend Figur 2, wobei hier das Befestigungselement 12 in axialer Verlängerung des hinteren Zylinderdeckel 20 angeordnet ist, so dass der Zentriervorsprung 44 mit dem darin eingesetzten Stopfen 26 in das Befestigungsloch 46 des Befestigungselements 12 einrastet. Der Arbeitszylinder 10 ist hierbei nicht verschwenkbar, wie auch schon bei der Flanschbefestigung entsprechend Figur 2.

Figur 8 zeigt weiterhin eine sogenannte Fußbefestigung des Arbeitszylinders mit zwei Befestigungselementen 12, die jeweils am vorderen sowie am hinteren Zylinderdeckel 18, 20 angeordnet sind. Die Befestigung entspricht der der Figuren 1 und 6 mit dem Unterschied, dass hierbei die Schwenkbarkeit des Arbeitszylinders durch ein zweites Befestigungselement 12 verhindert wird. Alternativ hierzu wäre noch eine Variante denkbar, bei der der vordere Zylinderdeckel 18 mittels des Befestigungselements 12 entsprechend Figur 8 befestigt ist, während der hintere Zylinderdeckel 20 eine Flanschbefestigung entsprechend Figur 7 aufweist, oder umgekehrt.

Figur 9 zeigt schließlich in einem schematischen Längsschnitt den Aufbau des Zylindergehäuses 14. Das Zylindergehäuse 14 wird durch das hohlzylindrische Zylinderrohr 16 sowie die endseitig damit verbundenen Zylinderdeckel 18 und 20 gebildet. Die beiden Zylinderdeckel 18 und 20 sind im Wesentlichen gleich aufgebaut und durch geringe Montagemodifikationen gegeneinander austauschbar. Der hintere Zylinderdeckel 20 ist am Ende einer Durchgangsbohrung 58 mit dem Stopfen 26 druckdicht verschlossen, der beispielsweise eingeschraubt, eingepresst, eingebördelt oder anderweitig in die Durchgangsbohrung 58 eingefügt sein kann. Der Stopfen 26 ist in einen Zentriervorsprung 44 eingesetzt, der dem Zentriervorsprung 44 des vorderen Zylinderdeckels 18 entspricht. Die Durchgangsbohrung 58 des vorderen Zylinderdeckels 18 ist zur Aufnahme und axialen Verschiebbarkeit einer Kolbenstange 24 offen. Nahe der Öffnung ist eine Führungsbuchse 60 vorgesehen, die ein axiale und radiale Lagerung der Kolbenstange 24 bewirkt und deren leichtes Gleiten ermöglicht.

Ein Druckraum 62 innerhalb des Zylindergehäuses 14 kann mittels der Fluidanschlüsse 36 mit einem hydraulischen oder pneumatischen Druck beaufschlagt werden, wodurch eine Linearbewegung der Kolbenstange 24 bewirkt werden kann. Weiterhin ist am Zentriervorsprung 44 des vorderen Zylinderdeckels 18 eine Dichtung sowie ein Abstreifer 64 erkennbar, durch die der Druckraum 62 nach außen hin abgedichtet ist. Außen an den Zylindermantelflächen der Zylinderdeckel 18 und 20 sind die ersten Lagermittel 27 vorgesehen, die mit den entsprechenden zweiten Lagermitteln 29 an den Befestigungsarmen 32 des Befestigungselements 12 verrastbar sind. Anhand der Figur 9 wird deutlich, dass die weitgehend identisch aufgebauten Zylinderdeckel 18 und 20 eine universelle Lagerung des Arbeitszylinders 10 mit nur einem Typ von Befestigungselementen 12 ermöglichen.

Die erfindungsgemäßen Befestigungselemente 12 eignen sich für eine universelle Lagerung des Arbeitszylinders entsprechend den Figuren 1, 2 und 6 bis 8.

## Patentansprüche

1. Befestigungselement zur variablen Schwenk- und/oder Festlagerung eines Arbeitszylinders (10), mit einem Basisbereich (33), der Befestigungsmittel (45) zu seiner Befestigung an einer Tragstruktur (35) aufweist und von dem zwei sich mit Abstand gegenüberliegende Befestigungsarme (32) wegragen, wobei die Befestigungsarme (32) mit Lagermitteln (29) für einen schwenkbeweglichen Lagerungseingriff an einander entgegengesetzten Seiten des Außenumfanges des Arbeitszylinder (10) ausgestattet sind und der Basisabschnitt (33) mit Lagermitteln (41) für einen bedarfsweise zusätzlichen stirnseitigen formschlüssigen Lagerungseingriff an dem Arbeitszylinder (10) ausgebildet ist.

2. Befestigungselement nach Anspruch 1, **dadurch gekennzeichnet, dass** an den Befestigungsarmen (32) zweite Lagermittel (29) angeordnet sind, die mit an einander entgegengesetzten Seiten des Außenumfanges des Gehäuses (14) des Arbeitszylinders (10) vorgesehenen ersten Lagermitteln (27) verbindbar sind.

3. Befestigungselement nach Anspruch 1 oder 2, **dadurch gekennzeichnet, dass** die Befestigungsarme (32) an ihren freien Enden jeweils zweite Lagermittel (29) zur Lagerung des Arbeitszylinders (10) aufweisen.

4. Befestigungselement nach Anspruch 2 oder 3, **dadurch gekennzeichnet, dass** die ersten Lagermittel (27) des Arbeitszylinders (10) als Aufnahmen (28) oder Vertiefungen und die zweiten Lagermittel (29) des Befestigungselements (12) als Zapfen oder Stifte ausgebildet sind.

5. Befestigungselement nach Anspruch 2 oder 3, **dadurch gekennzeichnet, dass** die ersten Lagermittel (27) des Arbeitszylinders (10) als Zapfen oder Stifte und die zweiten Lagermittel (29) des Befestigungselements (12) als Aufnahmen (28) oder Vertiefungen ausgebildet sind.

6. Befestigungselement nach einem der Ansprüche 1 bis 5, **dadurch gekennzeichnet, dass** die Befestigungsarme (32) federelastisch am Basisbereich (33) angeordnet sind.

7. Befestigungselement nach einem der voranstehenden Ansprüche, **dadurch gekennzeichnet, dass** am Basisbereich (33) dritte Lagermittel (41) zur Fixierung eines freien Endes, insbesondere zum formschlüssigen Eingriff eines Zentriervorsprungs (44), des Arbeitszylinders (10) vorgesehen sind.

8. Befestigungselement nach Anspruch 7, **dadurch gekennzeichnet, dass** die dritten Lagermittel (41) als Zentrierloch (42) zur formschlüssigen Aufnahme des zumindest an einer Stirnseite des Arbeitszylinders (10) angeordneten Zentriervorsprungs (44) ausgeführt sind.

9. Befestigungselement nach einem der voranstehenden Ansprüche, **dadurch gekennzeichnet, dass** am Basisbereich (33) des Befestigungselements (12) als Befestigungsmittel (45) wenigstens zwei Befestigungslöcher (46) ausgebildet sind, die außerhalb der Befestigungsarme (32) angeordnet sind.

10. Befestigungselement nach einem der voranstehenden Ansprüche, **dadurch gekennzeichnet, dass** es einstückig ausgebildet ist.

11. Befestigungselement nach einem der voranstehenden Ansprüche, **dadurch gekennzeichnet, dass** es aus einem metallischen Flachmaterial, insbesondere aus Federstahl, besteht.

12. Befestigungselement nach einem der voranstehenden Ansprüche, **dadurch gekennzeichnet, dass** es als Stanzbiegeteil ausgebildet ist.

13. Befestigungselement nach einem der voranstehenden Ansprüche, **dadurch gekennzeichnet, dass** die Befestigungsarme (32) jeweils mit einem abgewinkelten Fußbereich am Basisbereich (33) des Befestigungselements (12) verankert sind.

14. Befestigungselement nach einem der voranstehenden Ansprüche, **dadurch gekennzeichnet, dass** die ersten Lagermittel (27) des Arbeitszylinders (10) mit den zweiten Lagermitteln (29) des Befestigungselements (12) durch Verrastung im Rahmen eines vorübergehenden Auseinanderdrückens der federelastischen Befestigungsarme (32) verbindbar sind.

15. Befestigungselement nach Anspruch 14, **dadurch gekennzeichnet, dass** die Befestigungsarme (32) nach ihrer Verbindung mit dem Arbeitszylinder (10) mittels umgebogener Stützlaschen (48) am Auseinanderdrücken gehindert sind.

16. Befestigungselement nach Anspruch 15, **dadurch gekennzeichnet, dass** die Stützlaschen (48) durch Abwinkeln und Umbiegen von sich gegenüberliegenden freien Enden des Basisbereichs (33) gegen die Befestigungsarme (32) drückbar sind.

17. Befestigungselement nach Anspruch 16, **dadurch gekennzeichnet, dass** die Stützlaschen (48) nach Montage des Befestigungselements (23) in ihrer die Befestigungsarme (32) fixierenden Stellung gehalten sind.

18. Zylinderdeckel eines Arbeitszylinders, ausgebildet zur Lagerung an einem Befestigungselement (12) gemäß wenigstens einem der vorhergehenden Ansprüche, mit ersten Lagermitteln (27) an einander entgegengesetzten Seiten des Außenumfanges des Zylinderdeckels (18; 20) und mit einer axialen Durchgangsbohrung (58), die zur wahlweisen Lagerung einer Kolbenstange (24) oder zur Aufnahme eines Stopfens (26) vorbereitet ist und die in einen an einer äußeren Stirnseite des Zylinderdeckels (18; 20) vorgesehenen Zentriervorsprung (44) mündet, wobei die ersten Lagermittel (27) zur Verbindung mit an Befestigungsarmen (32) des Befestigungselementes (12) vorgesehenen zweiten Lagermitteln (29) und der Zentriervorsprung (44) zur Verbindung mit an dem Basisbereich (33) des Befestigungselementes (12) vorgesehenen dritten Lagermitteln (41) ausgebildet sind.

19. Zylinderdeckel nach Anspruch 18, **gekennzeichnet durch** eine Ausgestaltung als Lagerdeckel, wobei die Kolbenstange (24) in der nicht **durch** einen Stopfen verschlossenen axialen Durchgangsbohrung (58) axial verschiebbar und radial abgestützt lagerbar ist.

20. Zylinderdeckel nach Anspruch 18 oder 19, **gekennzeichnet durch** eine Ausgestaltung als Abschlussdeckel, wobei die axiale Durchgangsbohrung (58) mittels des eingesetzten Stopfens (26) druckdicht verschlossen ist.

21. Zylinderdeckeln nach Anspruch 20, **dadurch gekennzeichnet, dass** der Stopfen (26) mittels einer Schraub- oder Bördelverbindung in der Durchgangsbohrung (58) fixierbar ist.

## Claims

1. Fastening element for the variable swivel and/or fixed mounting of an operating cylinder (10), with a base area (33), which is provided with fastening means (45) for attachment to a supporting structure (35) and from which two mounting arms (32) arranged at a distance from and opposite one another project, wherein the mounting arms (32) are fitted with bearing means (29) for swivelling bearing engagement on opposite sides of the external circumference of the operating cylinder (10) and the base section (33) is designed with bearing means (41) for an optional additional positive end-face bearing engagement with the operating cylinder (10).

2. Fastening element according to claim 1, **characterised in that** second bearing means (29) are provided on the mounting arms (32), which can be connected to first bearing means (27) provided on opposite sides of the external circumference of the housing (14) of the operating cylinder (10).

3. Fastening element according to claim 1 or 2, **characterised in that** each of the mounting arms (32) is provided with second bearing means (29) at its free end for mounting the operating cylinder (10).

4. Fastening element according to claim 2 or 3, **characterised in that** the first bearing means (27) of the operating cylinder (10) are designed as locations (28) or recesses and the second bearing means (29) of the fastening element (12) are designed as pivot bolts or pins.

5. Fastening element according to claim 2 or 3, **characterised in that** the first bearing means (27) of the operating cylinder (10) are designed as pivot bolts or pins and the second bearing means (29) of the fastening element (12) are designed as locations (28) or recesses.

6. Fastening element according to any of claims 1 to 5, **characterised in that** the mounting arms (32) are located on the base area (33) in a spring-elastic manner.

7. Fastening element according to any of the preceding claims, **characterised in that** third bearing means (41) for locating a free end, in particular for positive engagement of a centring projection (44) of the operating cylinder (10), are provided at the base area (33).

8. Fastening element according to claim 7, **characterised in that** the third bearing means (41) are designed as a centring hole (42) for the positive location of the centring projection (44) provided on at least one end face of the operating cylinder (10).

9. Fastening element according to any of the preceding claims, **characterised in that** at least two mounting holes (46) are provided as fastening means (45) at the base area (33) of the fastening element (12), these being located outside the mounting arms (32).

10. Fastening element according to any of the preceding claims, **characterised in that** it is designed as a single piece.

11. Fastening element according to any of the preceding claims, **characterised in that** it is made of a metallic flat material, in particular of spring steel.

12. Fastening element according to any of the preceding claims, **characterised in that** it is designed as a stamped and bent part.

13. Fastening element according to any of the preceding claims, **characterised in that** each of the mounting arms (32) is anchored to the base area (33) of the fastening element (12) by an angled foot area.

14. Fastening element according to any of the preceding claims, **characterised in that** the first bearing means (27) of the operating cylinder (10) can be connected to the second bearing means (29) of the fastening element (12) by latching in the process of a temporary pushing-apart of the mounting arms (32).

15. Fastening element according to claim 14, **characterised in that** the pushing-apart of the mounting arms (32) following their connection to the operating cylinder (10) is prevented by means of bent supporting tabs (48).

16. Fastening element according to claim 15, **characterised in that** the supporting tabs (48) can be pressed against the mounting arms (32) by angling and bending of opposite free ends of the base area (33).

17. Fastening element according to claim 16, **characterised in that** the supporting tabs (48) are held in a position locating the mounting arms (32) following the installation of the fastening element (23).

18. Cylinder cover of an operating cylinder designed for mounting on a fastening element (12) according to at least one of the preceding claims, with first bearing means (27) on opposite sides of the external circumference of the cylinder cover (18; 20) and with an axial through-hole (58) prepared for the optional mounting of a piston rod (24) or the location of a plug (26) and terminating in a centring projection (44) at an outer end face of the cylinder cover (18; 20), wherein the first bearing means (27) are designed for connection to second bearing means (29) provided on mounting arms (32) of the fastening element (12) and the centring projection (44) is designed for connection to third bearing means (41) provided on the base area (33) of the fastening element (12).

19. Cylinder cover according to claim 18, **characterised by** design as bearing cover, wherein the piston rod (24) is axially movable and radially supported in the axial through-hole (58) not sealed by a plug.

20. Cylinder cover according to claim 18 or 19, **characterised by** design as end cover, wherein the axial through-hole (58) is pressure-sealed by means of the installed plug (26).

21. Cylinder cover according to claim 20, **characterised in that** the plug (26) can be located in the through-hole (58) by means of a threaded or flared connection.

## Revendications

1. Élément de fixation pour le montage variable pivotant et/ou fixe d'un vérin (10) avec une zone de base (33), qui présente des moyens de fixation (45) pour sa fixation sur une structure porteuse (35) et dont partent deux bras de fixation (32) mutuellement opposés à distance, les bras de fixation (32) étant munis de moyens de soutien (29) pour une prise de soutien mobile en pivotement sur des côtés mutuellement opposés de la périphérie extérieure du vérin (10) et la section de base (33) étant réalisée avec des moyens de soutien (41) pour une éventuelle prise de soutien frontale supplémentaire par engagement positif sur le vérin (10).

2. Élément de fixation selon la revendication 1, **caractérisé en ce que** sur les bras de fixation (32) sont placés des deuxièmes moyens de soutien (29) qui peuvent être reliés à des premiers moyens de soutien (27) prévus sur des côtés mutuellement opposés de la périphérie extérieure du boîtier (14) du vérin (10).

3. Élément de fixation selon la revendication 1 ou 2, **caractérisé en ce que** les bras de fixation (32) présentent à leurs extrémités libres à chaque fois des deuxièmes moyens de soutien (29) afin de soutenir le vérin (10).

4. Élément de fixation selon la revendication 2 ou 3, **caractérisé en ce que** les premiers moyens de soutien (27) du vérin (10) sont réalisés comme des logements (28) ou des renfoncements et les deuxièmes moyens de soutien (29) de l'élément de fixation (12) sont conformés en tenons ou ergots.

5. Élément de fixation selon la revendication 2 ou 3, **caractérisé en ce que** les premiers moyens de soutien (27) du vérin (10) sont conformés en tenons ou ergots et les deuxièmes moyens de soutien (29) de l'élément de fixation (12) sont réalisés comme des logements (28) ou des renfoncements.

6. Élément de fixation selon l'une des revendications 1 à 5, **caractérisé en ce que** les bras de fixation (32) sont montés de manière élastique sur la partie de base (33).

7. Élément de fixation selon l'une des revendications précédentes, **caractérisé en ce que** sur la partie de base (33) sont prévus des troisièmes moyens de soutien (41) pour la fixation d'une extrémité libre, en particulier pour la prise par engagement positif d'une saillie de centrage (44), du vérin (10).

8. Élément de fixation selon la revendication 7, **caractérisé en ce que** les troisièmes moyens de soutien (41) sont réalisés comme un orifice de centrage (42) pour la réception par engagement positif de la saillie de centrage (44) placée au moins sur une face frontale du vérin (10).

9. Élément de fixation selon l'une des revendications précédentes, **caractérisé en ce que** sur la partie de base (33) de l'élément de fixation (12) sont réalisés, en tant que moyens de fixation (45), au moins deux orifices de fixation (46), qui sont placés à l'extérieur des bras de fixation (32).

10. Élément de fixation selon l'une des revendications précédentes, **caractérisé en ce qu'**il est réalisé d'un seul tenant.

11. Élément de fixation selon l'une des revendications précédentes, **caractérisé en ce qu'**il est composé d'un matériau métallique plat, en particulier d'acier à ressort.

12. Élément de fixation selon l'une des revendications précédentes, **caractérisé en ce qu'**il est conformé en pièce pliée-estampée.

13. Élément de fixation selon l'une des revendications précédentes, **caractérisé en ce que** les bras de fixation (32) sont ancrés chacun par une partie de pied coudée sur la partie de base (33) de l'élément de fixation (12).

14. Élément de fixation selon l'une des revendications précédentes, **caractérisé en ce que** les premiers moyens de soutien (27) du vérin (10) peuvent être reliés aux deuxièmes moyens de soutien (29) de l'élément de fixation (12) par crantage dans le cadre d'un écartement provisoire des bras de fixation élastiques (32).

15. Élément de fixation selon la revendication 14, **caractérisé en ce qu'**après leur liaison avec le vérin (10), les bras de fixation (32) sont empêchés de s'écarter au moyen de pattes d'appui repliées (48).

16. Élément de fixation selon la revendication 15, **caractérisé en ce que** les pattes d'appui (48) peuvent être pressées contre les bras de fixation (32) par coudage et repliage des extrémités libres opposées de la partie de base (33).

17. Élément de fixation selon la revendication 16, **caractérisé en ce** les pattes d'appui (48) sont maintenues dans leur position immobilisant les bras de fixation (32) après le montage de l'élément de fixation (23).

18. Couvercle de vérin, réalisé pour se monter sur un élément de fixation (12) selon au moins l'une des revendications précédentes, avec des premiers moyens de soutien (27) sur des côtés mutuellement opposés de la périphérie extérieure du couvercle de vérin (18 ; 20) et avec un passage axial (58), qui est disponible au choix pour soutenir une tige de piston (24) ou pour recevoir un bouchon (26) et qui débouche au niveau d'une saillie de centrage (44) prévue dans une face extérieure frontale du couvercle (18 ; 20), les premiers moyens de soutien (27) étant conformés en vue d'une liaison avec des deuxièmes éléments de soutien (29) prévus sur des bras de fixation (32) de l'élément de fixation (12) et la saillie de centrage (44) étant conformée pour être reliée à des troisièmes moyens de soutien (41) prévus sur la zone de base (33) de l'élément de fixation (12).

19. Couvercle de vérin selon la revendication 18, **caractérisé par** une configuration en couvercle de soutien, la tige de piston (24) pouvant être soutenue dans le passage axial (58) non fermé par un bouchon d'une manière mobile axialement et avec soutien radial.

20. Couvercle de vérin selon la revendication 18 ou 19, **caractérisé par** une configuration en couvercle de fermeture, le passage axial (58) étant fermé d'une manière hermétique à la pression au moyen du bouchon (26) inséré.

21. Couvercle de vérin selon la revendication 20, **caractérisé en ce que** le bouchon (26) peut être fixé dans le passage (58) au moyen d'une liaison vissée ou sertie.
